# EUROPEAN PATENT APPLICATION

(11) **EP 4 123 147 A1**
(43) Date of publication of application: **25.01.2023**
(21) Application number: 22185866.5
(22) Date of filing: 19.07.2022
(51) Int. Cl.: F02C 7/22, F01D 21/14

(54) **DETECTING A FUEL LEAK IN AN ENGINE FUEL SYSTEM**

(30) Priority: 19.07.2021 US 202117379557
(71) Applicant: PRATT & WHITNEY CANADA CORP., Longueuil, Québec J4G 1A1 (CA)
(72) Inventor: MESHKINFAM, Ezzat, (01BE5) Longueuil, J4G 1A1 (CA); LU, Xuening, (01BE5) Longueuil, J4G 1A1 (CA); DURAND, Sean, (01BE5) Longueuil, J4G 1A1 (CA)
(74) Representative: Dehns

(57) **Abstract**

An assembly (20) is provided for an engine. This engine assembly includes a fuel system (22), a sensor (56) and a processing system (26). The fuel system (22) includes a fuel source (28), an engine component (30) and a fuel circuit (32) configured to direct fuel from the fuel source (28) to the engine component (30). The sensor (56) is configured to provide sensor data indicative of a measured parameter of the fuel directed through the fuel circuit (32) from the fuel source (28) to the engine component (30). The processing system (26) is configured to identify a fuel leak in the fuel system (22) based on the sensor data. The fuel leak is identified when a measured value corresponding to the measured parameter of the fuel is less than an expected value corresponding to an expected parameter for the fuel directed through the fuel circuit (32) from the fuel source (28) to the engine component (30).

## Description

### BACKGROUND OF THE DISCLOSURE

### 1. Technical Field

This disclosure (invention) relates generally to an engine and, more particularly, to monitoring a fuel system of the engine.

### 2. Background Information

A gas turbine engine includes a fuel system for directing fuel from a fuel reservoir to a plurality of fuel injectors. Fuel leakage from the fuel system may pose an operational and/or an environmental hazard. It is known in the art therefore to include sensors for detecting fuel leaks within the gas turbine engine. While known systems and methods for detecting fuel leaks have various advantages, there is still room in the art for improvement, particularly where the fuel is a highly combustible fuel such as hydrogen.

### SUMMARY OF THE DISCLOSURE

According to an aspect of the present invention, an assembly is provided for an engine. This engine assembly includes a fuel system, a sensor and a processing system. The fuel system includes a fuel source, an engine component and a fuel circuit configured to direct fuel from the fuel source to the engine component. The sensor is configured to provide sensor data indicative of a measured parameter of the fuel directed through the fuel circuit from the fuel source to the engine component. The processing system is configured to identify a fuel leak in the fuel system based on the sensor data. The fuel leak is identified when a measured value corresponding to the measured parameter of the fuel is less than an expected value corresponding to an expected parameter for the fuel directed through the fuel circuit from the fuel source to the engine component.

According to another aspect of the present invention, another assembly is provided for an engine. This engine assembly includes a fuel system, a sensor and a processing system. The fuel system includes a fuel source, a fuel injector and a fuel circuit configured to direct fuel from the fuel source to the fuel injector. The sensor is configured to provide sensor data indicative of a measured pressure of the fuel directed through the fuel circuit from the fuel source to the fuel injector. The processing system is configured to identify a fuel leak in the fuel system based on the sensor data. The fuel leak is identified when a measured value of the measured pressure of the fuel is different than an expected value of an expected pressure for the fuel directed through the fuel circuit from the fuel source to the fuel injector.

According to still another aspect of the present invention, a method is provided involving an engine. During this method, fuel is directed through a fuel circuit from a fuel source to an engine component. Sensor data is provided indicative of a measured parameter of the fuel being directed through the fuel circuit from the fuel source to the engine component. The sensor data is processed to identify a fuel leak. The fuel leak is identified when a measured value corresponding to the measured parameter of the fuel is less than an expected value corresponding to an expected parameter for the fuel being directed through the fuel circuit from the fuel source to the engine component.

The following optional features may be applied to any of the above aspects.

The fuel may be or otherwise include hydrogen fuel. The measured parameter may be a pressure of the hydrogen fuel within and directed through the fuel circuit.

The processing system may also be configured to identify the fuel leak as being located upstream of the sensor when the measured value corresponding to the measured parameter of the fuel is less than the expected value corresponding to the expected parameter for the fuel.

The sensor may be configured as or otherwise include a fuel pressure sensor. The measured parameter of the fuel may be a measured pressure of the fuel directed through the fuel circuit from the fuel source to the engine component.

The sensor may be configured as or otherwise include a fuel flow sensor. The measured parameter of the fuel may be a measured flowrate of the fuel directed through the fuel circuit from the fuel source to the engine component.

The expected value may be a first expected value. The fuel leak may be identified when the measured value corresponding to the measured parameter of the fuel is less than the first expected value corresponding to the expected parameter for the fuel directed through the fuel circuit from the fuel source to the engine component during a first mode of engine operation. The fuel leak may be identified when the measured value corresponding to the measured parameter of the fuel is greater than a second expected value corresponding to the expected parameter for the fuel directed through the fuel circuit from the fuel source to the engine component during a second mode of engine operation.

The engine assembly may also include a second sensor configured to provide second sensor data indicative of a second measured parameter of the fuel directed through the fuel circuit from the fuel source to the engine component. The processing system may also be configured to identify the fuel leak in the fuel system based on the second sensor data. The fuel leak may be identified when a second measured value corresponding to the second measured parameter of the fuel is different than a second expected value corresponding to a second expected parameter for the fuel directed through the fuel circuit from the fuel source to the engine component.

The measured parameter and the second measured parameter may be of a common type of parameter.

The processing system may also be configured to identify a malfunction in the sensor or the second sensor by processing the sensor data and the second sensor data.

The fuel circuit may include a valve with an orifice. The sensor may be arranged at the orifice.

The fuel circuit may include a pump with an orifice. The sensor may be arranged at the orifice.

The engine may be a gas turbine engine. The engine component may be configured as or otherwise include a fuel injector within the gas turbine engine.

The fuel may be or otherwise include hydrogen fuel.

The fuel may be or otherwise include hydrocarbon fuel.

The engine assembly may also include an indicator configured to provide an indication to an engine operator following identification of the fuel leak by the processing system.

The fuel circuit may include a flow regulator. The processing system may also be configured to signal the flow regulator to reduce or stop flow of the fuel through the fuel circuit to the engine component when the fuel leak is identified.

The engine assembly may also include a safety system configured to purge the fuel circuit with an inert fluid following identification of the fuel leak by the processing system.

The fuel system may also include a second fuel reservoir. The processing system may also be configured to signal the fuel system to direct second fuel to the engine component from the second fuel reservoir when the fuel leak of the fuel from the fuel reservoir is identified.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a schematic illustration of an assembly for an engine.
FIG. 2 is a schematic illustration of a fuel system in signal communication with a processing system.
FIG. 3 is a schematic illustration of the fuel system configured to deliver fuel to multiple components of the engine.
FIG. 4 is a schematic illustration of a sensor configured with a fuel pump.
FIG. 5 is a schematic illustration of the sensor configured with a fuel valve.
FIG. 6 is a schematic illustration of the sensor configured with a fuel conduit.
FIG. 7 is a flow diagram of a method involving the engine and its assembly.
FIG. 8 is a flow diagram of the fuel system configured with a safety system and in signal communication with the processing system.
FIGS. 9A and 9B are schematic illustrations of the fuel system configured with multiple fuel sources and in signal communication with the processing system.
FIG. 10 is a schematic illustration of the fuel system configured with multiple sensors in signal communication with the processing system.
FIG. 11 is a schematic illustration of a turbofan turbine engine with which the engine assembly may be included.

### DETAILED DESCRIPTION

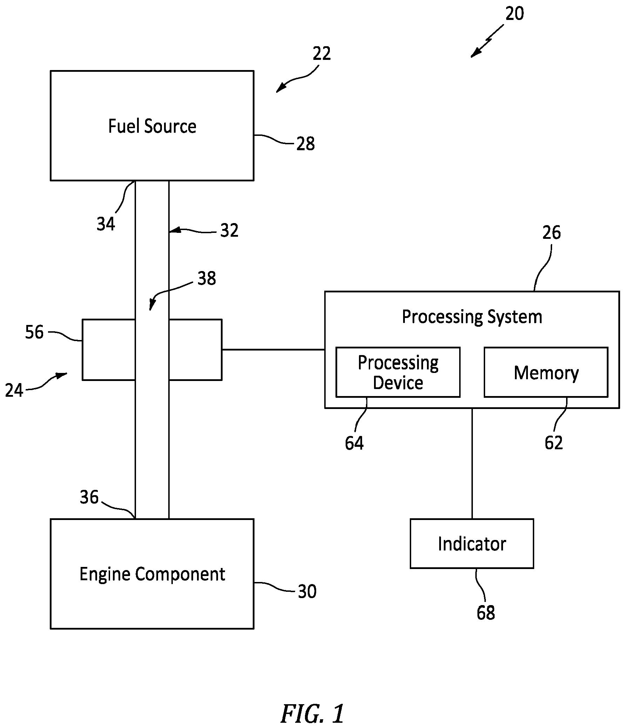

FIG. 1 illustrates an assembly 20 for an engine. For ease of description, the engine is described below as a gas turbine engine. This turbine engine may be configured as a turbofan turbine engine, a turbojet turbine engine, a turboprop turbine engine, a turboshaft turbine engine, an auxiliary power unit (APU) or an industrial gas turbine engine configured for generating power. The present disclosure, however, is not limited to the foregoing exemplary turbine engines. Furthermore, the present disclosure is not limited to turbine engine applications. For example, the engine assembly 20 may alternatively be configured for an internal combustion (IC) engine such as a piston engine or a rotary engine.

The engine assembly 20 of FIG. 1 includes a fuel system 22, a sensor system 24 and a processing system 26 (e.g., a controller). The fuel system 22 includes a fuel source 28, an engine component 30 and a fuel circuit 32.

The fuel source 28 is configured to provide fuel for the fuel system 22. The fuel source 28 may also be configured to contain and hold a quantity of the fuel prior to, during and/or after engine operation. The fuel source 28, for example, may be configured as a fuel reservoir such as a container; e.g., a tank, a cylinder, a pressure vessel, a bladder, etc. The fuel source 28 of FIG. 1 includes a fuel source fuel outlet 34.

The engine component 30 may be, may include or may be part of any component or structure of the engine which may receive the fuel. The engine component 30 of FIG. 1, for example, may be configured as a fuel injector. Alternatively, the engine component 30 may be configured as another component of the fuel system 22 such as a fuel manifold. The present disclosure, however, is not limited to the foregoing exemplary engine components. The engine component 30 of FIG. 1 includes an engine component fuel inlet 36.

The fuel circuit 32 is configured to direct (e.g., flow, pump and/or otherwise deliver) the fuel from the fuel source 28 to the engine component 30. The fuel circuit 32 of FIG. 1, for example, is fluidly coupled with and between the fuel source 28 and the engine component 30.

The fuel circuit 32 includes at least one flow passage 38. This flow passage 38 of FIG. 1 extends between and is fluidly coupled to the fuel source fuel outlet 34 and the engine component fuel inlet 36.

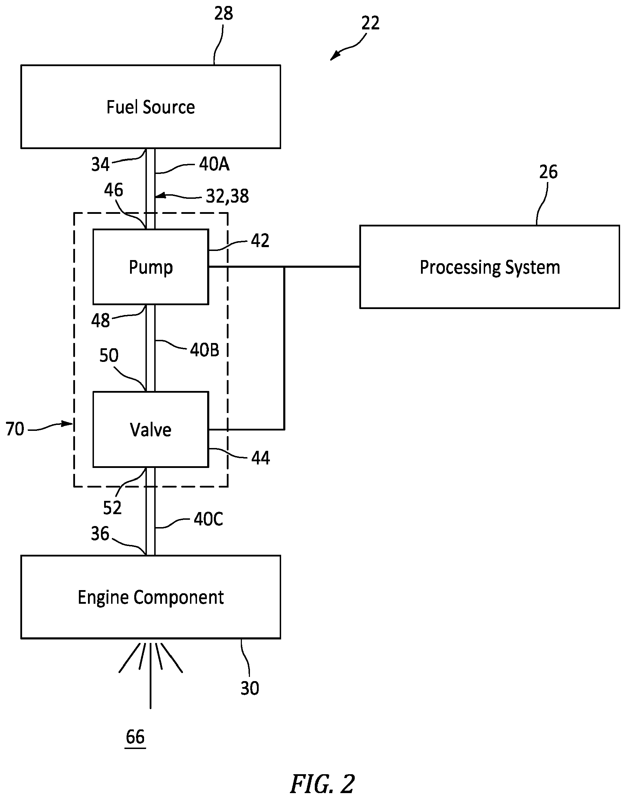

Referring to FIG. 2, the flow passage 38 may be formed by one or more fuel conduits; e.g., pipes, hoses, etc. The flow passage 38 may also or alternatively be formed by one or more internal volumes (e.g., passages, cavities, spaces, bores, etc.) within and/or through one or more other components of the fuel system 22 / the engine. The flow passage 38 of FIG. 2, for example, includes / is formed by a plurality of fuel conduits 40A-C (generally referred to as "40"), a fuel pump 42 and a fuel valve 44 (e.g., a shutoff valve, a flow control valve, etc.). The upstream conduit 40A extends between and is fluidly coupled to the fuel source fuel outlet 34 and a fuel inlet 46 of the fuel pump 42. The midstream conduit 40B extends between and is fluidly coupled to a fuel outlet 48 of the fuel pump 42 and a fuel inlet 50 of the fuel valve 44. The downstream conduit 40C extends between and is fluidly coupled to a fuel outlet 52 of the fuel valve 44 and the engine component fuel inlet 36. With this arrangement, the fuel pump 42 and/or the fuel valve 44 may regulate flow of the fuel within / directed through the fuel circuit 32 from the fuel source 28 to the engine component 30.

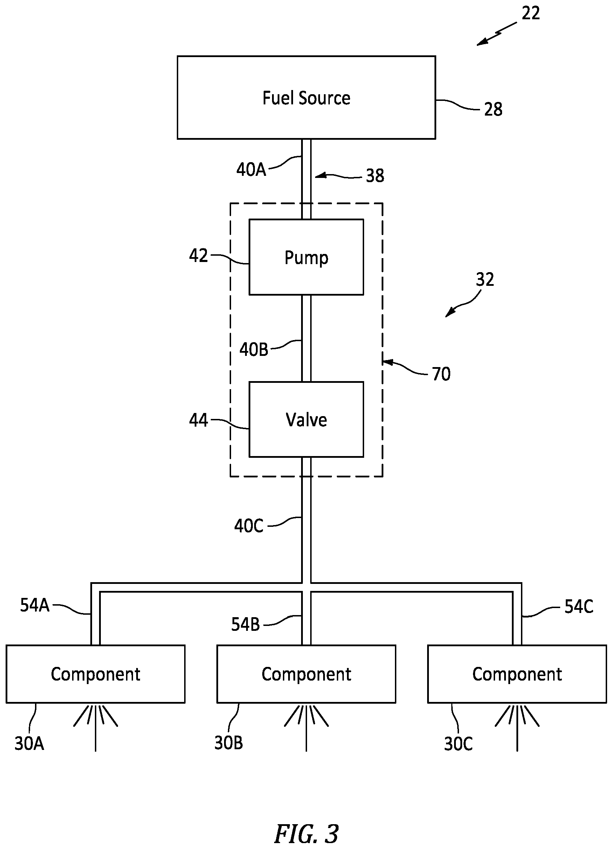

For ease of description, the fuel circuit 32 is described above and shown in FIG. 2 in a simplified form. In other embodiments, however, the fuel circuit 32 may also include one or more additional components such as, but not limited to, a fuel filter, a heat exchanger (e.g., a heater), an additional pump, an additional valve, a bypass passage, etc. The fuel circuit 32 may also or alternatively include more than one flow passage. The fuel circuit 32 of FIG. 3, for example, includes a plurality of parallel flow passages 54A-C (generally referred to as "54") leading, for example, to multiple different engine components 30A-C (generally referred to as "30"); e.g., fuel injectors. Furthermore, while the fuel pump 42 is arranged upstream of the fuel valve 44 in FIGS. 2 and 3, the fuel valve 44 may alternatively be arranged upstream of the fuel pump 42; e.g., positions of the components 42 and 44 in FIGS. 2 and 3 may be reversed. In still other embodiments, the fuel pump 42 or the fuel valve 44 may be omitted and/or replaced by another fluid flow control device.

Referring again to FIG. 1, the sensor system 24 is configured to observe the fuel within the fuel system 22. The sensor system 24 of FIG. 1, for example, includes a sensor 56; e.g., a sensor probe. This sensor 56 of FIG. 1 is configured to measure a parameter of the fuel being directed through / within the fuel circuit 32 from the fuel source 28 to the engine component 30. Examples of the measured parameter include, but are not limited to, pressure and flowrate of the fuel at a certain location within the fuel circuit 32. The sensor 56, for example, may be configured as or otherwise include a fuel pressure sensor and/or a fuel flow sensor.

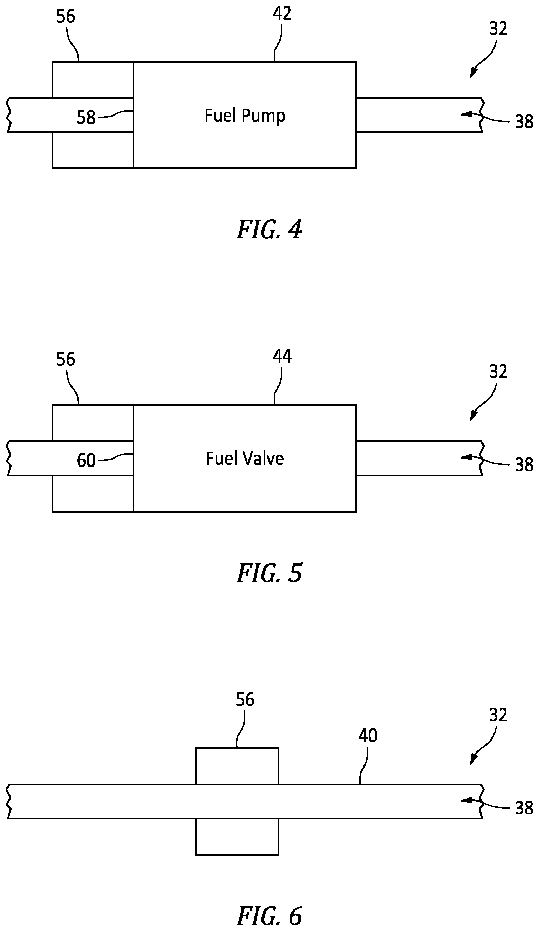

The sensor 56 may be connected to, fluidly coupled inline with and/or otherwise arranged with the fuel circuit 32. For example, referring to FIG. 4, the sensor 56 may be arranged at (e.g., on, adjacent or proximate) an orifice 58 to the fuel pump 42; e.g., the fuel pump fuel inlet 46 or the fuel pump fuel outlet 48 of FIG. 2. Referring to FIG. 5, the sensor 56 may alternatively be arranged at (e.g., on, adjacent or proximate) an orifice 60 to the fuel valve 44; e.g., the fuel valve fuel inlet 50 or the fuel valve fuel outlet 52 of FIG. 2. Referring to FIG. 6, the sensor 56 may alternatively be arranged at an intermediate location along one of the fuel conduits 40, or at an end of one of the fuel conduits 40. Of course, the sensor 56 may still also or alternatively be arranged with another component of the fuel circuit 32. The present disclosure therefore is not limited to the foregoing exemplary sensor locations.

Referring to FIG. 1, the processing system 26 is in signal communication with the sensor system 24. The processing system 26 of FIG. 1, for example, is hardwired to and/or wirelessly coupled to the sensor 56. Referring to FIG. 2, the processing system 26 may also be in signal communication with the fuel system 22. The processing system 26 of FIG. 2, for example, is hardwired to and/or wirelessly coupled to the fuel pump 42 and/or the fuel valve 44.

Referring to FIG. 1, the processing system 26 may be configured as an onboard engine controller; e.g., an electronic engine controller (EEC), an electronic control unit (ECU), a full-authority digital engine controller (FADEC), etc. The processing system 26 may be implemented with a combination of hardware and software. The hardware may include memory 62 and at least one processing device 64, which processing device 64 may include one or more single-core and/or multi-core processors. The hardware may also or alternatively include analog and/or digital circuitry other than that described above.

The memory 62 is configured to store software (e.g., program instructions) for execution by the processing device 64, which software execution may control and/or facilitate performance of one or more operations such as those described in the methods below. The memory 62 may be a non-transitory computer readable medium. For example, the memory 62 may be configured as or include a volatile memory and/or a nonvolatile memory. Examples of a volatile memory may include a random access memory (RAM) such as a dynamic random access memory (DRAM), a static random access memory (SRAM), a synchronous dynamic random access memory (SDRAM), a video random access memory (VRAM), etc. Examples of a nonvolatile memory may include a read only memory (ROM), an electrically erasable programmable read-only memory (EEPROM), a computer hard drive, etc.

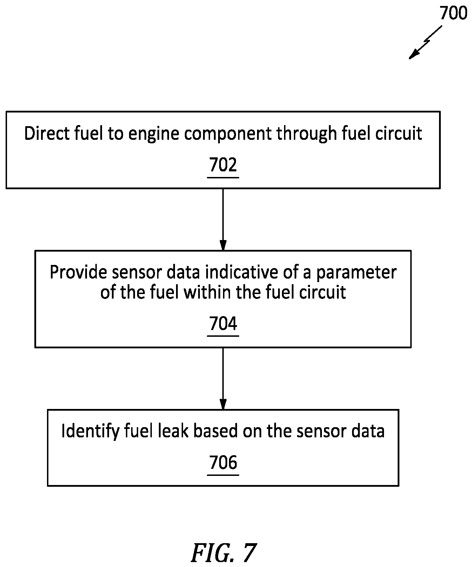

FIG. 7 is a flow diagram of a method 700 involving (e.g., monitoring and/or controlling) an engine. For ease of description, this method 700 is described below with reference to the fuel system 22 of FIG. 2 and the sensor system of FIG. 1. The method 700, however, may alternatively be performed for other fuel system configurations and/or with other sensor systems.

In step 702, the fuel is direct to the engine component 30 through the fuel circuit 32. The processing system 26 of FIG. 2, for example, may signal the fuel pump 42 and the fuel valve 44 to deliver the fuel to the engine component 30. More particularly, the fuel pump 42 may draw the fuel from the fuel source 28 via the upstream conduit 40A, and then pump that fuel sequentially through the midstream conduit 40B, the open fuel valve 44 and the downstream conduit 40C to the engine component 30. The engine component 30 may provide (e.g., inject) the received fuel for mixing with (e.g., compressed) air and subsequent combustion of the air-fuel mixture within a combustion chamber 66.

The fuel may be a non-hydrocarbon fuel such as, but not limited to, hydrogen fuel. The fuel, for example, may be stored in the fuel source 28 (e.g., a reservoir) as liquid hydrogen or a mixture of liquid hydrogen and hydrogen gas. At least some or all of the liquid hydrogen may subsequently by vaporized within the fuel circuit 32 (e.g., via a vaporizer; not shown) to provide hydrogen gas (e.g., H₂ gas) to the engine component 30. The engine component 30 may also or alternatively be configured as a vaporizer. The engine component 30, for example, may be configured to vaporize at least some or all of the liquid hydrogen prior to or while providing the hydrogen fuel for mixing with the air. Alternatively, the hydrogen fuel may be stored as substantially hydrogen gas within the fuel source 28. In such embodiments, the fuel pump 42 may be omitted where a pressure of the hydrogen (H₂) gas stored in the fuel source 28 is greater than pressure within the combustion chamber 66. Of course, various other types of non-hydrocarbon fuels are known in the art, and the present disclosure is not limited to any particular ones thereof. Furthermore, the present disclosure is not limited to non-hydrocarbon fuel applications. For example, the fuel may alternatively be or otherwise include a more typical hydrocarbon fuel such as, but not limited to, kerosene or jet fuel.

The fuel can be a highly combustible substance. This is particularly true where the fuel is or otherwise includes a gaseous fuel such as hydrogen (H₂) gas. Leakage of the fuel from the fuel system 22 and its fuel circuit 32 may therefore be problematic. Fuel leakage, for example, may pose a safety hazard where the fuel may be ignited and combusted outside of the combustion chamber 66. Fuel leakage may also pose an environmental hazard. To monitor for possible fuel leakage from the fuel system 22, the sensor system 24 obverses the fuel directed to the engine component 30. The sensor 56, for example, measures a parameter of the fuel directed through (e.g., flowing within) the fuel circuit 32 from the fuel source 28 to the engine component 30. In step 704, the sensor 56 generates sensor data (e.g., a voltage signal) indicative of the measured parameter, and provides the sensor data to the processing system 26.

In step 706, the sensor data is monitored to identify (e.g., detect) a fuel leak in the fuel system 22. The processing system 26, for example, processes the sensor data. The processing system 26 may compare a value (referred to as a measured value) corresponding to the measured parameter to a value (referred to as an expected value) corresponding to an expected parameter for the fuel at the sensor location, where the expected value may be stored as a predetermined value for a particular set of operating conditions in the memory 62. The processing system 26 may thereby compare what is actually occurring within the fuel circuit 32 at the sensor location (the measured parameter) to what is expected to occur within the fuel circuit 32 at the sensor location (the expected parameter) for a particular mode of engine operation. Where the measured value is different (e.g., less or greater) than the expected value, the processing system 26 may determine a fuel leak is present in the fuel system 22.

Where the measured value is less than the expected value (e.g., by at least a threshold amount), the processing system 26 may determine a fuel leak is present within the fuel system 22 and, more particularly, within the fuel circuit 32 upstream of the sensor 56. For example, where the sensor 56 measures a fuel pressure within the fuel circuit 32 of X-2 Bar at the sensor location but expects the fuel pressure within the fuel circuit 32 to be X Bar at the sensor location, the processing system 26 may determine that 2 Bar of the fuel is leaking from the fuel circuit 32 upstream of the sensor 56. The measured pressure of the fuel at the sensor location may be less than expected because some of the fuel (e.g., 2 Bar of the fuel) may be leaking out of the fuel circuit 32 prior to reaching the sensor location thereby driving the measured fuel pressure lower than expected. A similar comparison may be made where the sensor measures flowrate (or another parameter) of the fuel within the fuel circuit 32 at the sensor location. For example, where the measured fuel flowrate is less than expected, the processing system 26 may determine some of the fuel is leaking out of the fuel circuit 32 prior to reaching the sensor location thereby driving the measured fuel flowrate lower than expected.

Referring to FIG. 1, following identification of the fuel leak, the processing system 26 may signal an indicator 68 to provide an indication to an engine operator; e.g., a pilot where the engine is configured in an aircraft propulsion system. This indication is provided to communicate to the engine operator that the fuel system 22 and its fuel circuit 32 has a fuel leak so that the engine operator may take appropriate action. The indication may be a visual indication where, for example, the indicator 68 is configured as or otherwise includes a warning light, a gauge, a screen or otherwise. The indication may also or alternatively be an audible indication where, for example, the indicator 68 is configured as or otherwise includes an audio speaker, a bell or an alarm.

Referring to FIG. 2, following identification of the fuel leak, the processing system 26 may also or alternatively signal a flow regulator 70 of the fuel system 22 to (e.g., significantly) reduce or stop the flow of fuel through the fuel circuit 32 to the engine component 30. This flow regulator 70 may be configured as or otherwise include the fuel pump 42 and/or the fuel valve 44. The processing system 26, for example, may signal the fuel pump 42 to stop pumping the fuel. The processing system 26 may also or alternatively signal the fuel valve 44 to close, thereby fluidly decoupling the fuel source 28 from the engine component 30.

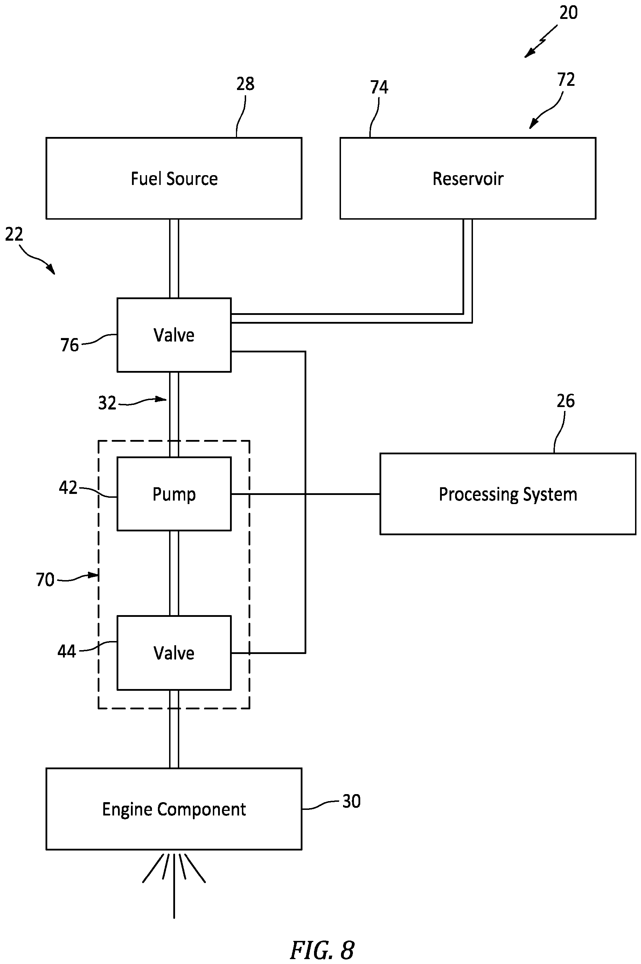

Referring to FIG. 8, following identification of the fuel leak, the processing system 26 may also or alternatively signal a safety system 72 to purge some or all of the fuel out of the fuel circuit 32. The safety system 72 of FIG. 8, for example, includes a fluid reservoir 74 and a (e.g., 3-way) fluid valve 76. The fluid reservoir 74 may be a container that holds a safety fluid such as, but not limited to, an inert fluid; e.g., inert gas. The fluid valve 76 is configured to selectively fluidly couple the fluid reservoir 74 to the fuel circuit 32 (and decouple the fuel source 28 from the fuel circuit 32) such that the safety fluid may flow through and purge the fuel from the fuel circuit 32 when the fluid valve 76 is actuated.

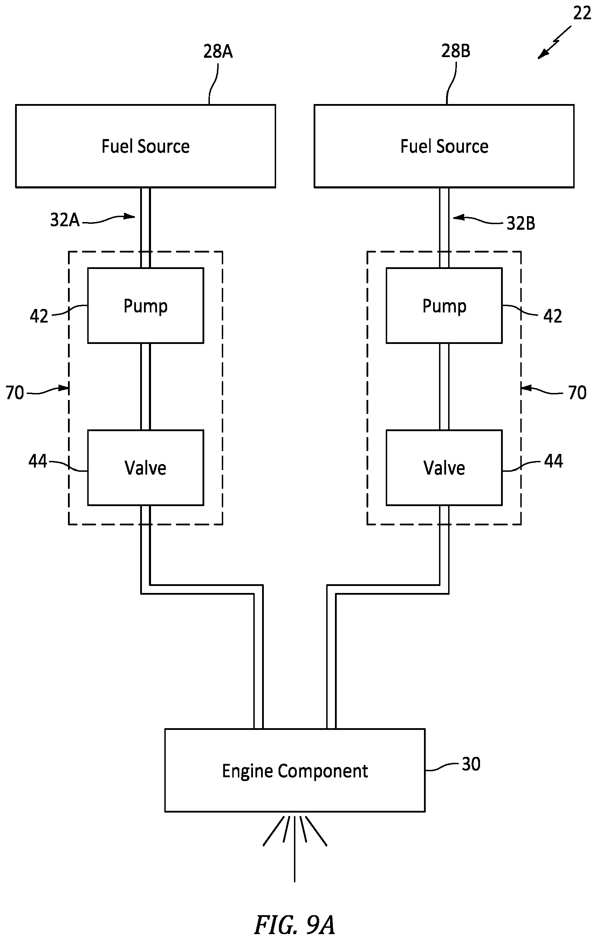

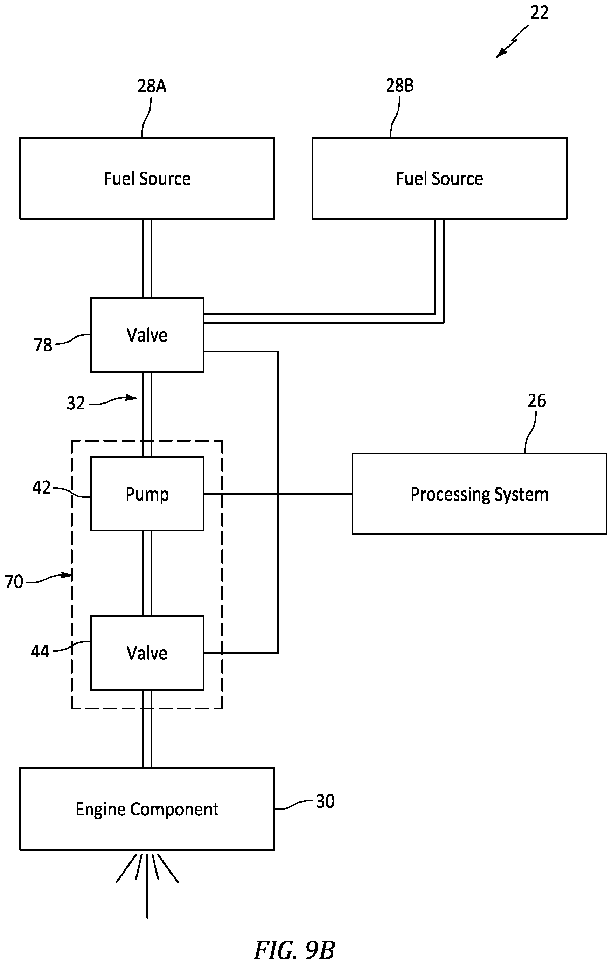

Referring to FIGS. 9A and 9B, following identification of the fuel leak, the processing system 26 may also or alternatively switch the engine to operate on another fuel. For example, where the engine is operating on a non-hydrocarbon fuel such as hydrogen gas when the fuel leak is identified, the engine may be switched to operate on a hydrocarbon fuel such as kerosene or jet fuel. The fuel system 22 of FIG. 9A, for example, includes a plurality of fuel sources 28A and 28B (generally referred to as "28") and a plurality of parallel fuel circuits 32A and 32B (generally referred to as "32") which provide respective (e.g., different) fuels to the engine component 30. When one of the fuel circuits (e.g., 32A or 32B) is shut off (e.g., via its valve 44 and/or operation of its pump 42 and/or otherwise), the other one of the fuel circuits (e.g., 32B or 32A) may be activated (e.g., via its valve 44 and/or operation of its pump 42 and/or otherwise). In another example, referring to FIG. 9B, the fuel system 22 may include a (e.g., 3-way) valve 78 configured to selectively fluidly couple one of multiple fuel sources (e.g., 28A or 28B) to the fuel circuit 32. The present disclosure, of course, is not limited to the foregoing exemplary multi-fuel source arrangements.

The method 700 is described above as detecting / identifying the fuel leak during operation of the engine. However, in other embodiments, a fuel leak may also or alternatively be identified while the engine is non-operational. For example, the sensor system 24 may observe fuel flow within the fuel circuit 32 and then provide the sensor data to the processing system 26. Where the measured value (e.g., a positive value) corresponding to the measured parameter is higher than the expected value (e.g., here a zero value) corresponding to the expected parameter, the processing system 26 may identify presence of a fuel leak in the fuel circuit 32. For example, where the sensor 56 measures a positive fuel pressure within the fuel circuit 32 when there should be a zero fuel pressure, there is likely a fuel leak in a control element upstream of the sensor location. Similarly, where the sensor 56 measures a positive fuel flowrate within the fuel circuit 32 when there should be a zero fuel flowrate, again there is likely a fuel leak in a control element upstream of the sensor location.

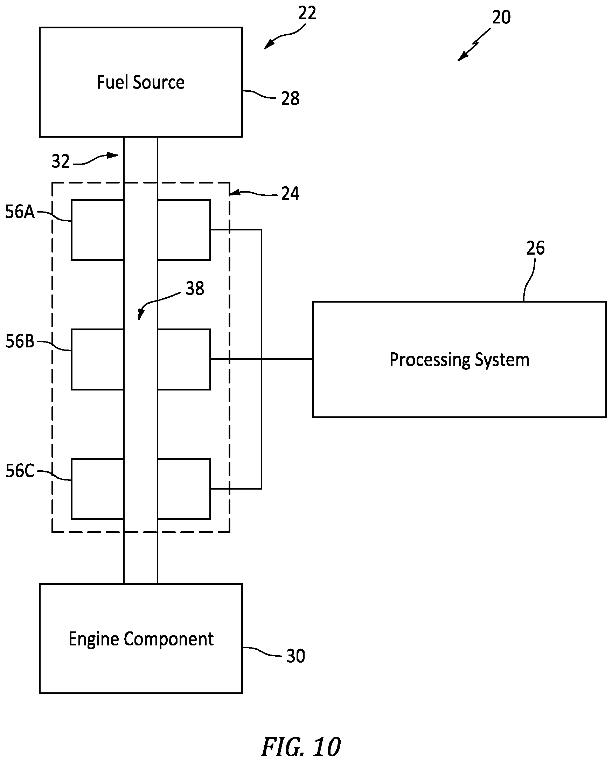

The sensor system 24 is described above as including the single sensor 56. However, in other embodiments, the sensor system 24 may include a plurality of the sensors 56A-C (generally referred to as "54") as shown, for example, in FIG. 10. Each of these sensors 56 may be configured to measure a common or different parameter (e.g., fuel pressure, fuel flowrate, etc.) of the fuel directed within the fuel circuit 32 and provide corresponding sensor data to the processing system 26. The processing system 26 may process this sensor data to identify a fuel leak as described above. For example, the processing system 26 may identify presence of a fuel leak where a measured value corresponding to a parameter measured by any one of the sensors (e.g., 56A, 56B or 56C) is different (e.g., less or greater) than expected. Alternatively, the processing system 26 may identify presence of a fuel leak where a measured value corresponding to a parameter measured by any two or more (or all) of the sensors (e.g., 56A and 56B, 56A and 56C, 56B and 56C, or 56A-C) is different (e.g., less or greater) than expected.

Where the sensor system 24 includes the multiple sensors 56, the processing system 26 may be adapted to identify a sensor malfunction. For example, where the upstream sensor (e.g., 56A) measures a parameter different than expected, but multiple of the downstream sensors (e.g., 56B and 56C) measures parameters that are expected, the processing system 26 may determine that the upstream sensor (e.g., 56A) is malfunctioning.

Where the sensor system 24 includes the multiple of sensors 56, the processing system 26 may identify a region in the fuel circuit 32 where the fuel leak is located. For example, where the measured parameters from all of the sensors 56 are different than expected, the processing system 26 may determine a fuel leak is at least located upstream of those sensors 56; e.g., upstream of the sensor 56A. In another example, where the measured parameter from one of the downstream sensors (e.g., 56B or 56C) is different than expected but the measured parameter from one of the upstream sensors (e.g., 56A or 56B) is as expected, the processing system 26 may determine a fuel leak is at least located fluidly between the upstream and the downstream sensors 56.

The fuel pump 42 is described above as a main fuel pump between the fuel source 28 and the engine component 30. However, in other embodiments, the fuel system 22 and its fuel circuit 32 may include at least one additional fuel pump. In such embodiments, the fuel pump 42 may still be configured as the main (e.g., upstream) fuel pump. Alternatively, the fuel pump 42 may be configured as a boost pump; e.g., a downstream fuel pump. One or each of these fuel pumps may be configured with a respective sensor 56 at one of its orifices (e.g., its inlet or its outlet) as described above.

As described above, each sensor 56 may be arranged at (e.g., on, adjacent or proximate) an orifice (e.g., an inlet or an outlet) of a flow regulation element (e.g., the fuel pump 42 or the fuel valve 44). With such an arrangement, the expected parameter of the fuel may be easier to predict. For example, where the sensor 56 is positioned at the inlet or the outlet of the pump 42 or the valve 44, a pressure and a flowrate at those locations may be readily predicted assuming normal fuel system operation. The present disclosure, however, is not limited to any particular sensor locations.

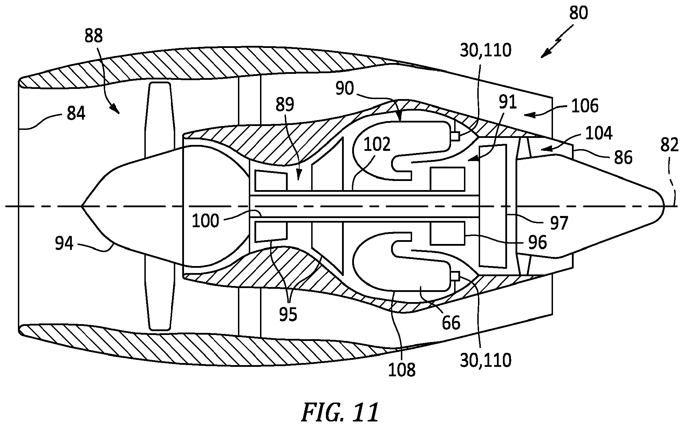

FIG. 11 illustrates an example of the engine with which the engine assembly components described above may be configured. This turbine engine is configured as a turbofan gas turbine engine 80. The turbine engine 80 of FIG. 11 extends along a centerline 82 of the turbine engine 80 between an upstream airflow inlet 84 and a downstream airflow exhaust 86. The turbine engine 80 includes a fan section 88, a compressor section 89, a combustor section 90 and a turbine section 91.

The fan section 88 includes a fan rotor 94. The compressor section 89 includes a compressor rotor 95. The turbine section 91 includes a high pressure turbine (HPT) rotor 96 and a low pressure turbine (LPT) rotor 97, where the LPT rotor 97 is configured as a power turbine rotor. Each of these rotors 94-97 includes a plurality of rotor blades arranged circumferentially around and connected to one or more respective rotor disks.

The fan rotor 94 is connected to the LPT rotor 97 through a low speed shaft 100. The compressor rotor 95 is connected to the HPT rotor 96 through a high speed shaft 102. The low speed shaft 100 extends through a bore of the high speed shaft 102 between the fan rotor 94 and the LPT rotor 97.

During operation, air enters the turbine engine 80 through the airflow inlet 84. This air is directed through the fan section 88 and into a core flowpath 104 and a bypass flowpath 106. The core flowpath 104 extends sequentially through the engine sections 89-91; e.g., an engine core. The air within the core flowpath 104 may be referred to as "core air". The bypass flowpath 106 extends through a bypass duct, which bypasses the engine core. The air within the bypass flowpath 106 may be referred to as "bypass air".

The core air is compressed by the compressor rotor 95 and directed into the (e.g., annular) combustion chamber 66 of a (e.g., annular) combustor 108 in the combustor section 90. Fuel is injected into the combustion chamber 66 via one or more fuel injectors 110 (e.g., the engine components 30) and mixed with the compressed core air to provide a fuel-air mixture. This fuel-air mixture is ignited and combustion products thereof flow through and sequentially cause the HPT rotor 96 and the LPT rotor 97 to rotate. The rotation of the HPT rotor 96 drives rotation of the compressor rotor 95 and, thus, compression of air received from an inlet into the core flowpath 104. The rotation of the LPT rotor 97 drives rotation of the fan rotor 94, which propels bypass air through and out of the bypass flowpath 106. The propulsion of the bypass air may account for a significant portion (e.g., a majority) of thrust generated by the turbine engine 80.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. An assembly (20) for an engine, comprising:
a fuel system (22) including a fuel source (28), an engine component (30) and a fuel circuit (32) configured to direct fuel from the fuel source (28) to the engine component (30);
a sensor (56) configured to provide sensor data indicative of a measured parameter of the fuel directed through the fuel circuit (32) from the fuel source (28) to the engine component (30); and
a processing system (26) configured to identify a fuel leak in the fuel system (22) based on the sensor data, wherein the fuel leak is identified when a measured value corresponding to the measured parameter of the fuel is less than an expected value corresponding to an expected parameter for the fuel directed through the fuel circuit (32) from the fuel source (28) to the engine component (30).

2. The assembly (20) of claim 1, wherein the processing system (26) is further configured to identify the fuel leak as being located upstream of the sensor (56) when the measured value corresponding to the measured parameter of the fuel is less than the expected value corresponding to the expected parameter for the fuel.

3. The assembly (20) of claim 1 or 2, wherein:
the sensor (56) comprises a fuel pressure sensor and the measured parameter of the fuel comprises a measured pressure of the fuel directed through the fuel circuit (32) from the fuel source (28) to the engine component (30); or
the sensor (56) comprises a fuel flow sensor and the measured parameter of the fuel comprises a measured flowrate of the fuel directed through the fuel circuit (32) from the fuel source (28) to the engine component (30).

4. The assembly (20) of any preceding claim, wherein:
the expected value is a first expected value;
the fuel leak is identified when the measured value corresponding to the measured parameter of the fuel is less than the first expected value corresponding to the expected parameter for the fuel directed through the fuel circuit (32) from the fuel source (28) to the engine component (30) during a first mode of engine operation; and
the fuel leak is identified when the measured value corresponding to the measured parameter of the fuel is greater than a second expected value corresponding to the expected parameter for the fuel directed through the fuel circuit (32) from the fuel source (28) to the engine component (30) during a second mode of engine operation.

5. The assembly (20) of any preceding claim, further comprising:
a second sensor (56) configured to provide second sensor data indicative of a second measured parameter of the fuel directed through the fuel circuit (32) from the fuel source (28) to the engine component (30); and
the processing system (26) further configured to identify the fuel leak in the fuel system based on the second sensor data, wherein the fuel leak is identified when a second measured value corresponding to the second measured parameter of the fuel is different than a second expected value corresponding to a second expected parameter for the fuel directed through the fuel circuit (32) from the fuel source (28) to the engine component (30).

6. The assembly (20) of claim 6, wherein the measured parameter and the second measured parameter are of a common type of parameter.

7. The assembly (20) of claim 5 or 6, wherein the processing system (26) is further configured to identify a malfunction in the sensor (56) or the second sensor (56) by processing the sensor data and the second sensor data.

8. The assembly (20) of any preceding claim, wherein:
the fuel circuit (32) comprises a valve (44) with an orifice (60) and the sensor (56) is arranged at the orifice (60); or
the fuel circuit (32) comprises a pump (42) with an orifice (58) and the sensor (56) is arranged at the orifice (58).

9. The assembly (20) of any preceding claim, wherein:
the engine comprises a gas turbine engine; and
the engine component (30) comprises a fuel injector (30, 110) within the gas turbine engine.

10. The assembly (20) of any preceding claim, wherein the fuel comprises hydrogen fuel or a hydrocarbon fuel.

11. The assembly (20) of any preceding claim, further comprising:
an indicator (68) configured to provide an indication to an engine operator following identification of the fuel leak by the processing system (26); and/or
a safety system (72) configured to purge the fuel circuit (32) with an inert fluid following identification of the fuel leak by the processing system (26).

12. The assembly (20) of any preceding claim, wherein:
the fuel circuit (32) comprises a flow regulator (70); and
the processing system (26) is further configured to signal the flow regulator (70) to reduce or stop flow of the fuel through the fuel circuit (32) to the engine component (30) when the fuel leak is identified.

13. The assembly (20) of any preceding claim, wherein:
the fuel system (22) further includes a second fuel reservoir (28); and
the processing system (26) is further configured to signal the fuel system (22) to direct second fuel to the engine component (30) from the second fuel reservoir (28) when the fuel leak of the fuel from the fuel reservoir (28) is identified.

14. The assembly (20) of any preceding claim, wherein:
the engine component comprises a fuel injector (30, 110), and the measured parameter of the fuel comprises a measured pressure of the fuel directed through the fuel circuit (32) from the fuel source (28) to the engine component (30).

15. A method (700) involving an engine, comprising:
(702) directing fuel through a fuel circuit (32) from a fuel source (28) to an engine component (30);
(704) providing sensor data indicative of a measured parameter of the fuel being directed through the fuel circuit (32) from the fuel source (28) to the engine component (30); and
(706) processing the sensor data to identify a fuel leak, wherein the fuel leak is identified when a measured value corresponding to the measured parameter of the fuel is less than an expected value corresponding to an expected parameter for the fuel being directed through the fuel circuit (32) from the fuel source (28) to the engine component (30),
wherein, optionally:
the fuel is hydrogen fuel and the measured parameter is a pressure of the hydrogen fuel within and directed through the fuel circuit (32).
